Europäisches Patentamt

European Patent Office

Office européen des brevets

(19)

(11) Veröffentlichungsnummer: **0 198 815 B1**

# (12) EUROPÄISCHE PATENTSCHRIFT

(45) Veröffentlichungstag der Patentschrift:
05.06.91 Patentblatt 91/23

(51) Int. Cl.$^5$: **G01N 27/30**

(21) Anmeldenummer: **86890079.6**

(22) Anmeldetag: **25.03.86**

(54) **Sensor zur Bestimmung von Elektrolytkonzentrationen.**

(30) Priorität: **16.04.85 AT 1148/85**

(43) Veröffentlichungstag der Anmeldung:
**22.10.86 Patentblatt 86/43**

(45) Bekanntmachung des Hinweises auf die
Patenterteilung:
**05.06.91 Patentblatt 91/23**

(84) Benannte Vertragsstaaten:
**DE FR GB**

(56) Entgegenhaltungen:
**EP-A- 0 135 101**
**DD-A- 106 086**
**DE-A- 2 251 287**
**DE-A- 3 001 669**
**DE-A- 3 420 947**
**US-A- 4 447 546**

(73) Patentinhaber: **AVL Medical Instruments AG**
**Stettemerstrasse 28**
**CH-8207 Schaffhausen (CH)**

(72) Erfinder: **Wolfbeis, Otto S., Otto**
**Im Hoffeld 32**
**A-8046 Graz (AT)**
Erfinder: **Hochmuth, Petra**
**Hauptstrasse 136**
**L-5366 Munzbach (LU)**

(74) Vertreter: **Krause, Walter, Dr. Dipl.-Ing.**
**Postfach 200 Singerstrasse 8**
**A-1010 Wien (AT)**

gestreutem Anregungslicht sowie von Ramanlicht ermöglicht ; wobei man als Stokes-Verschiebung die Differenz zwischen dem Absorptionsmaximum des Indikators und seinem Fluoreszenzmaximum bezeichnet.

Fluoreszenzoptische nicht potentialsensitive Sensoren sind zwar für eine Reihe verschiedener Ionen bekannt und beruhen in allen Fällen darauf, daß entweder ein Indikator mit der Meßgröße eine reversible Bindung eingeht, oder die Fluoreszenz des Indikators gelöscht wird, oder wie – im Falle des $CO_2$ – eine Verschiebung eines vorgelagerten Säure-Basen-Gleichgewichtes über eine pH-Messung verfolgt wird. Es fehlten jedoch bisher Fluoreszenzindikatoren für die Bestimmung der obengenannten wichtigsten Blutelektrolyte.

Nach einer weiteren Ausgestaltung der Erfindung ist vorgesehen, daß der potentialsensitive Fluoreszenzindikator zusammen mit der ionenselektiven Membran direkt auf einem lichtdurchlässigen Träger, insbesondere einem Glasträger, aufgebracht ist und das Anregungs- bzw. Fluoreszenzlicht durch diesen zu- bzw. ableitbar ist. Dadurch verfügt man gleichzeitig über einen stabilen Träger und einer Möglichkeit, das Anregungslicht zum Fluoreszenzindikator zuzuführen. Dabei kann das Anregungslicht auch im Inneren eines planparallele Deckflächen aufweisenden Trägerelementes so lange totalreflektiert werden, bis ein gegenüber der Umgebung erhöhter Brechungsindex der angrenzenden Indikatorschicht einen Durchtritt durch die Grenzfläche ermöglicht und somit die Anregung der Indikatormoleküle gewährleistet ist.

Gemäß einer Weiterbildung der Erfindung ist vorgesehen, daß der potentialsensitive Fluoreszenzindikator zusammen mit der ionenselektiven Membran über deren dem Fluoreszenzindikator abgewandten Seite mit dem Ende eines Lichtleiters, insbesondere einer Fiberoptik in Verbindung steht. Eine entsprechende Meßanordnung kann beispielsweise als fiberoptischer Katheter ausgebildet sein. In diesem Fall ist die Sensormembran, bestehend aus ionenselektiver Membran und Fluoreszenzindikator, in das Ende eines fiberoptischen Lichtleiters integriert. Wieder ist die Schicht mit dem potentialsensitiven Fluoreszenzindikator der Probe zugewandt. Das Anregungslicht wird über den fiberoptischen Lichtleiter dem Indikator zugeführt. Das Fluoreszenzlicht kann entweder durch den selben Lichtleiter geleitet werden oder durch den zweiten Arm eines zweiarmigen Lichtleiters. Als Lichtquellen kommen in Frage : Wolfram- und Halogenlampen, Gasentladungslampen, lichtemittierende Dioden (LED), Laser, und andere. Ihre Wahl richtet sich vor allem nach der analytischen Problemstellung und der Natur des Indikators.

Einen wesentlichen Vorteil stellt die Tatsache dar, daß solche optische Sensoren sehr klein gehalten werden können. So sind fiberoptische Sauerstoffkatheter von 0,2 mm Durchmesser beschrieben.

Weiters benötigen diese Sensoren im Gegensatz zu elektrochemischen keine Referenzelektrode und keine Elektrolytbrücke.

Das Anbringen der Fluoreszenzindikatoren an der Grenzschicht zwischen wäßriger und polymerer Phase erfolgt vorzugsweise durch physikalische oder chemische Immobilisierung, entweder an einem Trägermaterial oder direkt auf der Polymerphase. Die Immobilisierung hat den Vorteil, daß der Indikator nicht durch das Probenmaterial ausgewaschen wird. Zum Immobilisieren können Methoden angewandt werden, wie sie ganz allgemein für die Immobilisierung von organischen Molekülen in zahlreichen Veröffenlichungen eingehend beschrieben worden sind. Spezielle Immobilisierungsmethoden für Indikatoren sind aus der DE-OS 28 51 138 bekannt.

Weitere Ausgestaltungen der Erfindung sowie deren Vorteile werden im folgenden anhand der in der Zeichnung schematisch dargestellten Ausführungsbeispiele näher erläutert. Es zeigen die

Figur 1 das Funktionsschema eines erfindungsgemäßen Sensors, die

Figuren 2 und 3 Meßanordnungen bzw. Anbringungsmöglichkeiten des Sensors, die

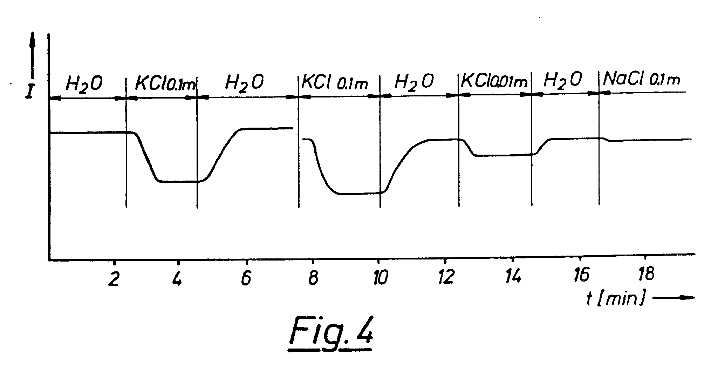

Figur 4 ein mit einer Meßanordnung nach Fig. 2 gewonnenes Meßsignal.

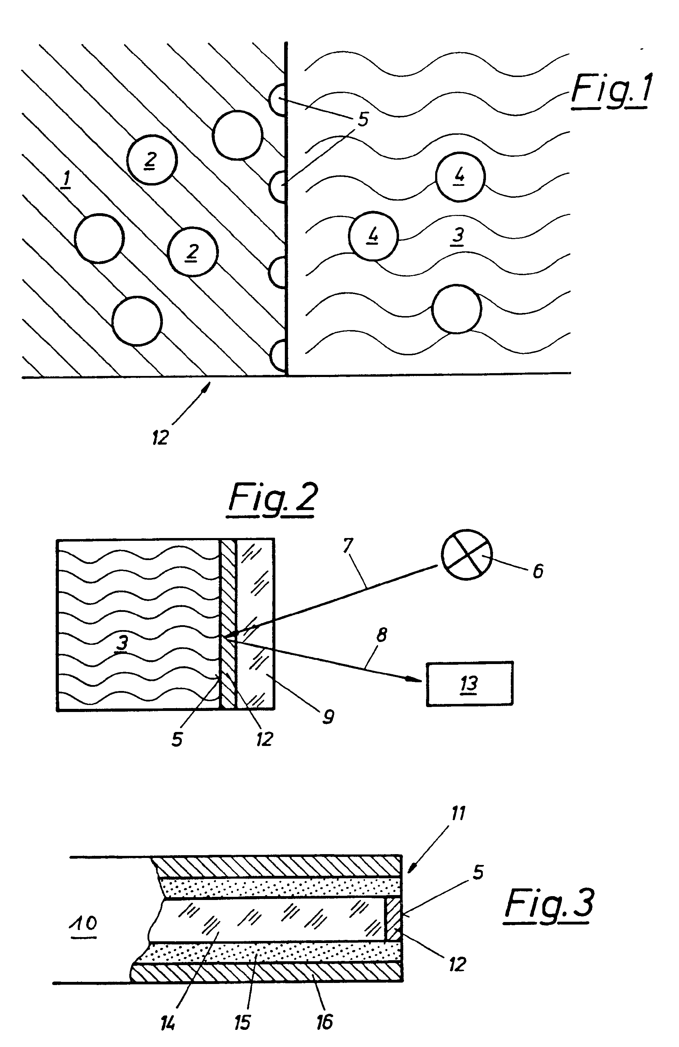

Nach Fig. 1 befinden sich in einer ionenselektiven Membran 1, beispielsweise einer Polymerschicht, die Carriermoleküle 2 und an deren Oberfläche der Fluoreszenzindikator 5, welcher potentialsensitiv fluoresziert. Vor der Polymerschicht befindet sich die Probenlösung 3 mit dem Elektrolyten 4, welcher durch die Carriermoleküle 2 zum Teil in die Polymerschicht eingeschleust wird. Die Indikatormoleküle des Fluoreszensindikators 5 sind chemisch oder physikalisch an der Polymerschicht immobilisiert. Die aus dem Ionentransport resultierende Potentialdifferenz an der Oberfläche führt zu einer Veränderung der Fluoreszenzintensität des Indikators, die gemessen wird. Die aus ionenselektiver Membran 1 und potentialsensitiven Fluoreszenzindikator 5 aufgebaute Sensormembran in Fig. 1 ist mit 12 bezeichnet. Die Fig. 2 zeigt schematisch eine Meßanordnung (hier speziell ein Aminco SPF 500 Spektrofluorimeter), wobei die Sensormembran 12 direkt auf einem Glasträger 9 aufgebracht ist. Das Anregungslicht 7 fällt, aus einer Lichtquelle 6 kommend, auf die Sensormembran 12, deren Fluoreszenzindikator 5 an der der Probenlösung 3 zugewandten Seite immobilisiert ist. Das Fluoreszenzlicht 8 wird in der üblichen Weise einer Erfassungs- und Auswerteeinheit 13 zugeleitet.

Nachstehend sei nun ein Beispiel für die Herstellung einer kaliumsensitiven Sensormembran angegeben.

2 mg Valinomycin, 2 mg Kalium-tetrakis-chlorphenylborat, 30 mg PVC und 66 mg Dioctylphthalat werden in 10 ml Tetrahydrofuran gelöst. 0,2 ml dieser Lösung gibt man auf ein Glasplättchen (2.5 × 2.6 cm)

mg Tosylchlorid und 100 mg CPG (Controlled Porous Glass, 500 A) gegeben. Diese Reaktionsmischung wird während 2 h unter Rückfluß gekocht. Nach der Abkühlung werden die CPG-Kügelchen mit Toluol und Aceton gewaschen. Getrocknet wird bei 100°C, während 3 h.

An das so erhaltene CP-Glas wird Rhodamin durch Kupplung mit Hilfe des Reagenzes EDC immobilisiert. Dazu gibt man zu den getrockneten CPG-Kügelchen 50 ml Wasser, welches 5 mg EDC und 11 mg Rhodamin B enthält und läßt sie 6 h bei Zimmertemperatur stehen. Danach erfolgt eine weitere Zugabe von 5 mg EDC. Nach 16 h gibt man wiederum 5 mg EDC zu und läßt 6 h reagieren. Abschließend wird das CP-Glas abfiltriert, mit Wasser und Aceton gewaschen und 3 h bei 100°C getrocknet.

0,2 ml einer Natrium-Carrier-Polyvinylchlorid Lösung (Gewichtzusammensetzung wie jene im ersten Beispiel) werden auf ein 2,5 × 2,8 cm großes Glasplättchen aufgetropft. Während des Eindunstens (bei Raumtemperatur) werden ca. 1 mg CP-Glas, an welchem vorher Rhodamin B immobilisiert wurde, aufgestreut. Dieses haftet nach vollständigem Trocknen der PVC-Membran fest an deren Oberfläche. Die so hergestellten Sensormembranen sind in dieser Form für die Bestimmung von Natriumionen gebrauchsfähig.

## Ansprüche

1. Sensor zur Bestimmung der Konzentration eines in wäßriger Probenlösung vorliegenden Elektrolyten, mit einer mit der Probenlösung in Kontakt bringbaren ionenselektiven Membran, wobei die zwischen der wäßrigen Probenlösung und der ionenselektiven Membran entstehende Potentialdifferenz der Elektrolytkonzentration zuordenbar ist, **dadurch gekennzeichnet**, daß auf der der Probenlösung (3) zugewandten Seite (1') der ionenselektiven Membran (1) ein Fluoreszenzindikator (5) immobilisiert ist, dessen Fluoreszenzintensität von der Potentialdifferenz an der Trennfläche von ionenselektiver Membran (1) und Probenlösung (3) abhängt.

2. Sensor nach Anspruch 1, dadurch gekennzeichnet, daß der potentialsensitive Fluoreszenzindikator (5) zusammen mit der ionenselektiven Membran (1) direkt auf einem lichtdurchlässigen Träger, insbesondere einem Glasträger (9), aufgebracht ist und das Anregungs- (7) bzw. Fluoreszenzlicht (8) durch diesen zu- bzw. ableitbar ist.

3. Sensor nach Anspruch 1, dadurch gekennzeichnet, daß der potentialsensitive Fluoreszenzindikator (5) zusammen mit der ionenselektiven Membran (1) über deren dem Fluoreszenzindikator (5) abgewandte Seite mit dem Ende (11) eines Lichtleiters, insbesondere einer Fiberoptik (10) in Verbindung steht.

## Claims

1. A sensor for determining the concentration of an electrolyte in an aqueous sample solution, with an ion-selective membrane which may be brought into contact with the sample solution, the potential difference arising between the aqueous sample solution and the ion-selective membrane corresponding to the concentration of the electrolyte, wherein a fluorescent indicator (5) is immobilised at the side (1') of said ion-selective membrane (1) facing towards the sample solution (3), whose fluorescence intensity depends on the potential difference at the boundary surface between said ion-selective membrane (1) and said sample solution (3).

2. A sensor according to claim 1, wherein said potential-sensitive fluorescent indicator (5), together with said ion-selective membrane (1), is directly applied on a transparent carrier plate (9), preferably made of glass, through which the excitation light (7) or fluorescent light (8) can be transmitted.

3. A sensor according to claim 1, wherein said potential-sensitive fluorescent indicator (5), together with said ion-selective membrane (1), is in contact with the end (11) of a light conductor, preferably an optical fiber (10), via the side of said membrane away from said fluorescent indicator (5).

## Revendications

1. Capteur pour la détermination de la concentration d'un électrolyte présent dans une solution aqueuse échantillon, comportant une membrane sélective d'ions pouvant être mise en contact avec la solution échantillon, la différence de potentiel entre la solution échantillon et la membrane sélective d'ions, à la surface de l'électrode pouvant être coordonnée à la concentration de l'électrolyte, caractérisé en ce qu'un indicateur fluorescent (5) est immobilisé sur le côté (1') de la membrane sélective d'ions (1) tourné vers la solution échantillon (3), indicateur dont l'intensité de fluorescence dépend de la différence de potentiel à la surface de séparation de la membrance sélective d'ions (1) et de la solution échantillon (3).

2. Capteur selon la revendication 1, caractérisé en ce que l'indicateur fluorescent (5) sensible à la différence de potentiel est appliqué, conjointement avec la membrane sélective d'ions (1), directement sur un support transparent, en particulier un support en verre (9), et la lumière excitatrice (7) ou la lumière fluorescente (8) peut être amenée ou, respectivement, renvoyée à travers celui-ci.

3. Capteur selon la revendication 1, caractérisé en ce que l'indicateur fluorescent (5) sensible à la différence de potentiel, conjointement avec la membrane sélective d'ions (1), est en connexion, par le côté de celle-ci qui est tourné vers l'indicateur fluorescent (5), avec l'extrémité (11) d'un guide de lumière, en particulier d'une fibre optique (10).

*Fig.1*

*Fig.2*

*Fig.3*

*Fig.4*